# EUROPEAN PATENT APPLICATION

(11) **EP 4 838 481 A1**
(43) Date of publication of application: **11.11.2026**
(21) Application number: 25461523.0
(22) Date of filing: 07.05.2025
(51) Int. Cl.: G06V 10/25, G06V 10/82, G06V 20/52, G06V 20/70

(54) **A COMPUTER-IMPLEMENTED METHOD AND A SYSTEM FOR PRODUCT RECOGNITION AND PLANOGRAM COMPLIANCE**

(71) Applicant: Omniaz Poland Sp. z o.o., 90-135 Lodz (PL)
(72) Inventor: SARWAS, Grzegorz, 02-892 Warszawa (PL); CIOBANU, Calin, 920024 Slobozia (RO); ZAVALNYI, Oleksandr, Kharkiv (UA); CZERSKI, Kamil, 22-400 Ploskie (PL); MAJEWSKI, Maciej, 30-716 Krakow (PL); TROJANOWSKI, Krzysztof, 03-017 Warszawa (PL)
(74) Representative: Kancelaria Eupatent.pl Sp. z o.o.

(57) **Abstract**

A computer-implemented method for product recognition and planogram compliance using a mobile device, the method comprising: scanning (101) a shelf; detecting (102) products in the shelf image; extracting (103) a product feature vector for each product image using a feature extractor being a convolutional neural network comprising a customised pooling layer at its last stage that combines max pooling and average pooling; receiving (104), at least one product pattern representing a product; recognising (105), for each product image, the product present in the product image using a recognising module; generating (106), an annotated view of the shelf image comprising bounding boxes around the recognised products; and receiving a planogram of the shelf and comparing (107) the annotated view of the shelf image with the planogram to generate a planogram compliance report. In another aspect, the invention relates to a system for product recognition and planogram compliance using a mobile device configured to perform the method according to the invention.

## Description

### TECHNICAL FIELD

The present invention pertains to the field of computer vision and retail technology, specifically focusing on methods and systems for product recognition and planogram compliance using mobile devices.

### BACKGROUND

In the retail industry, maintaining accurate product placement on shelves according to predefined planograms is crucial for optimising sales and ensuring customer satisfaction. Planograms are schematic representations that dictate the arrangement of products on retail shelves, aiming to maximise visibility and accessibility. However, manual verification of planogram compliance is labour-intensive, prone to human error, and often inefficient.

Existing solutions for automating planogram compliance typically involve the use of fixed cameras or specialised hardware to capture shelf images, followed by image processing techniques to identify and verify product placement. These systems often rely on traditional image processing methods, which can be limited in their ability to accurately recognise products under varying lighting conditions, angles, and occlusions. Moreover, these systems may require significant computational resources and infrastructure, making them less adaptable for dynamic retail environments.

Recent advancements in machine learning, particularly deep learning, have introduced more sophisticated approaches to image recognition. Advanced Convolutional Neural Networks (CNNs) and large Vision Transformer (ViT)-based models have demonstrated superior performance in object detection and classification tasks. However, the application of large CNNs and (ViT)-based models in mobile devices for real-time product recognition and planogram compliance remains challenging due to constraints in processing power and the need for efficient feature extraction.

EP3862948A1 describes a method for interactive product auditing using a mobile device, which leverages image recognition to identify products within segmented images. The process involves using a first set of candidate patterns to recognise a product in a specific region of interest and subsequently prompting user input to refine the identification process. This user input helps determine a second set of candidate patterns for identifying additional products in adjacent regions. While this method enhances the accuracy of product identification by incorporating user feedback, it poses significant challenges in terms of computational demands on mobile devices. The need for real-time image processing and pattern recognition can strain the limited processing power and battery life of mobile devices, potentially leading to slower performance and reduced usability in resource-constrained environments.

WO2021216357A1 outlines a system for managing inventory in retail facilities by defining and identifying product display areas on shelves using image capture devices and electronic databases. The system captures images of product display shelves, detects individual product packages, and defines distinct product display areas with virtual boundary lines. These boundaries are associated with unique product identifiers, facilitating inventory management. However, the system's reliance on high-resolution image capture and complex image processing algorithms can be resource-intensive, particularly for mobile devices with limited computational capabilities. Additionally, the accuracy of product identification and boundary definition may be compromised in scenarios with poor lighting or occluded products, leading to potential errors in inventory management and classification quality.

### SUMMARY

In view of the above, it would be advisable to develop a method and system that would at least partially eliminate the problems associated with the current state of the art in this technical field.

The present invention addresses these challenges by introducing a novel computer-implemented method and system that utilises a mobile device to perform product recognition and planogram compliance. The invention incorporates a customised convolutional neural network with a unique pooling layer configuration to enhance feature extraction and recognition accuracy. This approach not only improves the reliability of product identification but also facilitates real-time planogram compliance verification directly on mobile devices, offering a flexible and scalable solution for the retail industry.

The present invention provides a computer-implemented method for product recognition and planogram compliance using a mobile device, the method comprising:
- scanning a shelf comprising at least one product with a camera of the mobile device to obtain a shelf image;
- detecting products in the shelf image using a detector trained to detect the products, and cropping portions of the shelf image containing product facings as product images;
- extracting a product feature vector for each product image using a feature extractor, wherein the feature extractor is a convolutional neural network trained to extract the product feature vectors, the convolutional neural network comprising a customised pooling layer at its last stage that combines max pooling and average pooling;
- receiving, on the mobile device, at least one product pattern representing a product;
- recognising, for each product image, the product present in the product image using a recognising module configured to compare the product feature vector with the at least one product pattern, thereby obtaining a set of recognised product images with an associated probability of recognition;
- generating, using a shelf image view generation module, an annotated view of the shelf image comprising bounding boxes around the recognised products, each bounding box having a property indicating the probability of recognition; and
- receiving a planogram of the shelf and comparing the annotated view of the shelf image with the planogram to generate a planogram compliance report.

The advantages of the method according to the invention lie in integrating real-time, on-device feature extraction with direct planogram comparison and reporting, reducing the time between product scanning and compliance verification. By using a customised lightweight convolutional neural network CNN to handle both detection and recognition on the mobile device, the approach avoids the delays often seen in centralised or off-site systems. It thereby provides a streamlined workflow (scan → detect → recognise → compare) that surpasses the purely inventory-focused methods found in the state of the art, where defining display areas is emphasised but planogram compliance is not addressed in an end-to-end manner. The method according to the invention performed on-device also contrasts with the more partial or server-reliant methods, ensuring that recognition, verification, and compliance reporting happen together in one cohesive process.

Large CNNs and (ViT)-based models can generate robust feature vectors and generalise well. In order to achieve high on-device performance while having comparable accuracy and generalisation, the lightweight CNN model customisation was introduced both to improve independent training and to achieve more effective knowledge distillation process from more powerful models.

Preferably, the customised pooling layer is implemented by introducing two independent pooling layers, comprising a max pooling layer and an average pooling layer applied in parallel on the same input feature map, wherein resulting features produced by the max pooling layer and the average pooling layer are concatenated, and the aggregated features are used to create the product feature vector.

This strategy for implementation of the customised pooling layer creates richer feature vectors, capturing both the strongest activations (max pooling) and their overall distribution (average pooling), thereby reducing the recognition errors typical of single-mode pooling. The resulting resilience to varying shelf conditions, reflective packaging, and partial occlusions goes beyond standard CNN architectures described in prior art.

Preferably, the convolutional neural network comprises a squeeze-and-excitation block and an average pooling layer before the squeeze-and-excitation block, and wherein the customised pooling layer is implemented by adding a max pooling layer before the squeeze-and-excitation block in addition to the average pooling layer.

This combination enables the network to tune channel attention selectively, boosting relevant product features that may otherwise be overlooked. Established shelf-auditing documents have not proposed embedding squeeze-and-excitation blocks in a mobile-friendly manner for real-time shelf scanning. The result is more accurate recognition of subtly different product packaging, especially in cluttered or low-contrast images, distinguishing it from standard recognition systems that rely on simpler channel weighting mechanisms.

Preferably, the feature extractor training is further enhanced by knowledge distillation and further comprising:
providing a pre-trained teacher network configured for product recognition;
generating soft target outputs for a plurality of product images using the teacher network; and
training the convolutional neural network to produce the product feature vectors by minimising a knowledge distillation loss function based on a divergence between the soft target outputs and the outputs of the convolutional neural network.

Through knowledge distillation, the feature extractor can better absorb the critical patterns and generalisations captured by the teacher model, enhancing its performance while maintaining efficiency.

Preferably, after generating the annotated view of the shelf image, the method further comprises enabling a user to manually correct any erroneous product recognition.

This feature provides immediate human oversight of AI-generated bounding boxes, ensuring that errors can be rectified in-store without waiting for a secondary or remote review. Currently, known solutions do not incorporate such a direct correction loop immediately after product bounding boxes are displayed on the same device. By embedding this correction step, the system ensures higher final accuracy, reflecting real-time conditions and user expertise.

Preferably, the product patterns comprise external enrolments and/or local enrolments, wherein:
- the local enrolments are product patterns generated based on product feature vectors generated earlier by the same mobile device and stored locally on the mobile device; and
- the external enrolments are product patterns generated based on product feature vectors generated earlier by another mobile device or by an external server.

This flexibility tackles practical challenges such as intermittent connectivity or the need to add new product references on the spot. Allowing local enrolment improves speed and independence in day-to-day store operations since recognition can proceed even if the device is offline.

In another aspect, the invention is related to a system for product recognition and planogram compliance using a mobile device, characterised in that the system comprises a mobile device including: a camera configured to scan a shelf comprising at least one product to obtain a shelf image; a non-transitory medium configured to store data and instructions; and a control circuit configured to perform the method according to the invention.

The system, according to the invention, is a self-contained solution with a camera, a non-transitory medium for data and instructions, and a control circuit that performs all the steps of the method according to the invention. This integration on a single device is a departure from prior references, which relies on fixed-position cameras or extensive store infrastructure. By housing detection, recognition, feature extraction, and planogram check in one place, the system enables immediate, self-sufficient compliance results.

Preferably, the mobile device further comprises:
- a detector trained to detect products in the shelf image and to crop parts of the shelf image containing product facings as product images;
- a feature extractor implemented by a convolutional neural network trained to extract product feature vectors from the product images, the convolutional neural network comprising a customised pooling layer at its last stage, wherein the customised pooling layer combines max pooling and average pooling;
- a product pattern's storage configured to receive at least one product pattern representing the product;
- a recognising module configured to compare, for each product image, the product feature vector with at least one product pattern, thereby obtaining a set of recognised product images with a probability of product recognition;
- a shelf image view generation module configured to generate an annotated view of the shelf image, wherein the annotated view comprises recognised products in bounding boxes, each having a property indicating the probability of recognition; and
- a planogram compliance module configured to receive a planogram of the shelf and compare the annotated view of the shelf image with the planogram to generate a planogram compliance report.

This modular architecture provides a clear framework for performing every stage of product identification and planogram matching in real time on the mobile device, setting it apart from the prior art that performs these steps in separate or remote modules. The advanced feature extractor, in particular, ensures that the benefits of the customised pooling approach flow into everyday shelf auditing, offering the user a concise, device-local pipeline rather than a partially outsourced method.

Preferably, the customised pooling layer is implemented by introducing two independent pooling layers, comprising a max pooling layer and an average pooling layer applied in parallel on the same input feature map, wherein resulting features produced by the max pooling layer and the average pooling layer are concatenated, and the aggregated features are used to create the product feature vector.

This design is specified as part of the system's hardware and software integration, ensuring that the device can handle the computational demands without offloading them. It improves accuracy in real-world shelf scenarios with irregular product arrangements or variable lighting, providing a more robust approach than single-pooling networks commonly seen in standard implementations.

Preferably, the convolutional neural network comprises a squeeze-and-excitation block and an average pooling layer before the squeeze-and-excitation block, and wherein the customised pooling layer is implemented by adding a max pooling layer before the squeeze-and-excitation block in addition to the average pooling layer.

By combining channel-attention weighting and parallel pooling, the network gains superior capability to highlight fine-grained product details, something typical prior solutions in the shelf-auditing domain do not address. Through this enhanced feature processing, the system delivers higher confidence in product recognition, even when scanning products whose main distinctive markings may be relatively small or partly obscured.

Preferably, the system is further configured after generating the annotated view of the shelf image to enable a user to manually correct any erroneous product recognition.

This correction step, performed after bounding boxes are shown with confidence properties, is an immediate failsafe. Prior art often entails a secondary process for correction, typically after uploading shelf images or partial results to a server. The claimed approach of instant on-device correction delivers faster resolution to misidentified products and a more reliable alignment with the planogram in real time.

Preferably, the product patterns comprise external enrolments and/or local enrolments, wherein: the local enrolments are product patterns generated based on product feature vectors produced earlier by the same mobile device and stored locally on the mobile device; and the external enrolments are product patterns generated based on product feature vectors produced earlier by another mobile device or by an external server.

This architecture allows either a single-store solution or a multi-store environment to handle updates to product catalogues dynamically. When compared with solutions that rely solely on central repositories or preloaded references, this claim ensures that new products and store-specific variations can be recognised almost immediately, improving both portability and speed of deployment.

Preferably, the feature extractor is trained by knowledge distillation and feature extractor training comprising:
providing a pre-trained teacher network configured for product recognition;
generating soft target outputs for a plurality of product images using the teacher network; and
training the convolutional neural network to produce the product feature vectors by minimising a knowledge distillation loss function based on a divergence between the soft target outputs and the outputs of the convolutional neural network.

Through knowledge distillation, the feature extractor can better absorb the critical patterns and generalisations captured by the teacher model, enhancing its performance while maintaining efficiency.

The invention relates to a computer-implemented method and system for product recognition and planogram compliance using a mobile device, wherein a shelf image is obtained by scanning a shelf with an integrated camera. The term "shelf image" encompasses both still photographs and dynamic recordings, thereby accommodating various modes of image capture. In the context of this application, the term "product" is interpreted broadly to include not only the product itself but also various types of three-dimensional advertising materials that may be placed on or attached to shelves. The recognition of a product is achieved solely based on its visual appearance, without recourse to barcodes, QR codes, or other machine-readable symbols.

At the outset, the mobile device acquires a shelf image of a shelf containing at least one product. This image, which may contain multiple product facings along with background elements, serves as the basis for further processing. A detector, which is implemented as a trained machine learning model, is then applied to the shelf image to identify and localise product facings. The detector crops these identified regions to generate individual product images that can be further processed.

Each product image is processed by a feature extractor comprising a convolutional neural network (CNN) that has been specifically trained to generate a product feature vector for each image. The product feature vector is a high-dimensional numerical representation that encapsulates key visual characteristics of the product, including edges, textures, colours, and other discriminative attributes that define its appearance. The CNN is augmented by a customised pooling layer at its final stage, which enhances the robustness of the feature extraction by combining the strengths of both max pooling and average pooling. In some embodiments, this customised pooling layer is realised by introducing two independent pooling layers operating in parallel on the same input feature map, the outputs of which are concatenated to form a comprehensive product feature vector. In alternative embodiments, the CNN may incorporate a squeeze-and-excitation block together with an average pooling layer, wherein an additional max pooling layer is added prior to the squeeze-and-excitation block, further refining the extracted features.

Subsequently, the mobile device receives at least one product pattern representing a known product. The product pattern is essentially a stored reference feature vector derived from prior enrolments, which may be generated locally by the same device or externally by another mobile device or a remote server. The recognising module then compares each extracted product feature vector with the received product patterns to determine the identity of the product depicted in the image. This comparison yields a probability of recognition that quantifies the confidence in the identification result.

Following product recognition, an annotated view of the original shelf image is generated using a dedicated shelf image view generation module. This module overlays bounding boxes on the recognised product images, with each bounding box being coded in accordance with the probability of recognition. The bounding box property indicating the probability of recognition can be one of:
- A colour (e.g. green for well-recognised, blue for uncertainties, red for unrecognised products)
- A shade (e.g. dark grey for well recognised products and light grey for unrecognised products)
- A opacity (e.g. low opacity for well recognised products and high opacity for unrecognised products)
- A fill-in opacity colour (e.g. green semi-opaque box for well-recognised, blue semi-opaque box for uncertainties, red semi-opaque box for unrecognised products)
- A boundary shape (e.g. rectangle for well-recognised, triangle for uncertainties, oval for unrecognised products)

The final step involves the receipt of a reference planogram, which specifies the intended arrangement of products on the shelf, and the comparison of the annotated shelf image with this planogram to produce a planogram compliance report. This report highlights any discrepancies between the observed product placement and the intended layout.

The system embodiment comprises a mobile device equipped with a camera, a non-transitory medium for storing data and instructions, and a control circuit for executing the method. In addition, the mobile device includes specific modules such as the detector for product facing identification, the feature extractor incorporating the customised pooling layer for generating robust product feature vectors, storage for maintaining product patterns, the recognising module for matching extracted features to stored patterns, the shelf image view generation module for producing annotated images, and the planogram compliance module for comparing the annotated view with the reference planogram. In certain embodiments, the system is further configured to allow a user to manually correct any erroneous product recognition after the annotated view is generated.

By integrating advanced deep learning techniques with a carefully designed pooling strategy in the convolutional neural network and by accommodating both local and external enrolments of product patterns, the invention provides an efficient, scalable, and accurate solution for real-time product recognition and planogram compliance in retail environments.

The invention presents a significant advancement by introducing the strategic use of pooling combinations to enhance the attention capabilities of convolutional neural networks. This approach is particularly advantageous when aiming to emulate the attention mechanisms typically found in larger, more complex models. By integrating customised pooling strategies, the invention allows for more nuanced feature extraction and representation, thereby enabling CNNs to approximate the performance of attention-based architectures without substantial increases in computational cost.

Moreover, the flexibility of applying these pooling combinations either directly to form final feature vector representations or within architectural modules-such as squeeze-and-excitation layers-demonstrates the method's adaptability and broad utility. This makes it a valuable enhancement for existing CNN-based systems, potentially improving their performance across a variety of tasks without requiring major architectural overhauls.

### BRIEF DESCRIPTION OF DRAWINGS

The object of the invention is described in details below with reference to preferable embodiments, which refer to the attached drawings wherein:
Fig. 1 shows schematically steps of the method according to the invention;
Fig. 2 shows schematically the system according to the invention;
Fig. 3 shows schematically a first embodiment of the customised pooling layer;
Fig. 4 shows schematically a second embodiment of the customised pooling layer.

### DETAILED DESCRIPTION

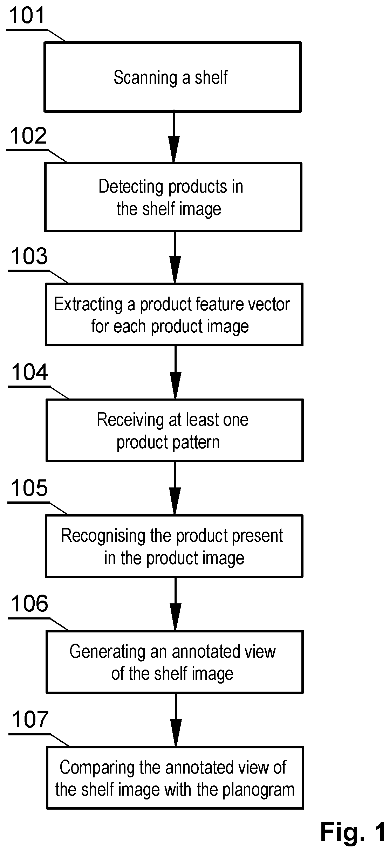

The present invention provides a computer-implemented method for product recognition and planogram compliance using a mobile device 200. The steps of the method are illustrated in Fig. 1. In the first step, referred to as scanning 101, a shelf comprising at least one product is scanned with the camera 210 of the mobile device 200 to obtain a digital shelf image. This image may include multiple product facings together with background details. In a subsequent step, detecting 102 is performed by means of a detector 221 trained to detect products in the shelf image. The system identifies regions corresponding to individual product facings and crops these regions to create distinct product images. Afterwards, extracting 103 each product feature vector is carried out by a feature extractor 222, which is a convolutional neural network trained to produce robust feature vectors; crucially, this network includes a customised pooling layer at its last stage, combining max pooling and average pooling to enrich its representational capabilities. Receiving 104 at least one product pattern on the mobile device 200 provides the basis for recognising 105 each product image. The recognising module 224 compares the extracted product feature vectors against the product pattern(s) to determine a most likely product identity and assigns each product image a probability of recognition that reflects the system's confidence. Generating 106 an annotated view of the shelf image follows, wherein bounding boxes are overlaid on the recognised products, each bounding box being coloured to denote the probability of recognition. Finally, the system receives a planogram for the shelf and compares 107 the annotated view with that planogram to produce a planogram compliance report that identifies any discrepancies between the observed product arrangement and the intended layout specified in the planogram.

This entire sequence offers a practical solution for automatically verifying correct product placement in retail environments.

In some embodiments, the method also allows a user to manually correct erroneous product recognition after the annotated view is generated, for example, when unforeseen variations in product packaging lead to misidentification.

In other embodiments, product patterns may be generated locally (local enrolments) on the same mobile device 200 or provided externally (external enrolments) from a remote server or a different mobile device. Local enrolments allow rapid deployment when the same mobile device 200 repeatedly scans identical products, whereas external enrolments ensure consistency across different devices or locations.

In further embodiments, the mobile device 200 may communicate with a remote server for part of the process, for instance by offloading more computationally intensive image processing steps.

A distinctive technical feature of the invention is the customised pooling layer 300A, 300B used in the feature extractor 223. It applies max pooling and average pooling in parallel on the same feature map, enabling the network to capture both strong local activations and overall distribution features.

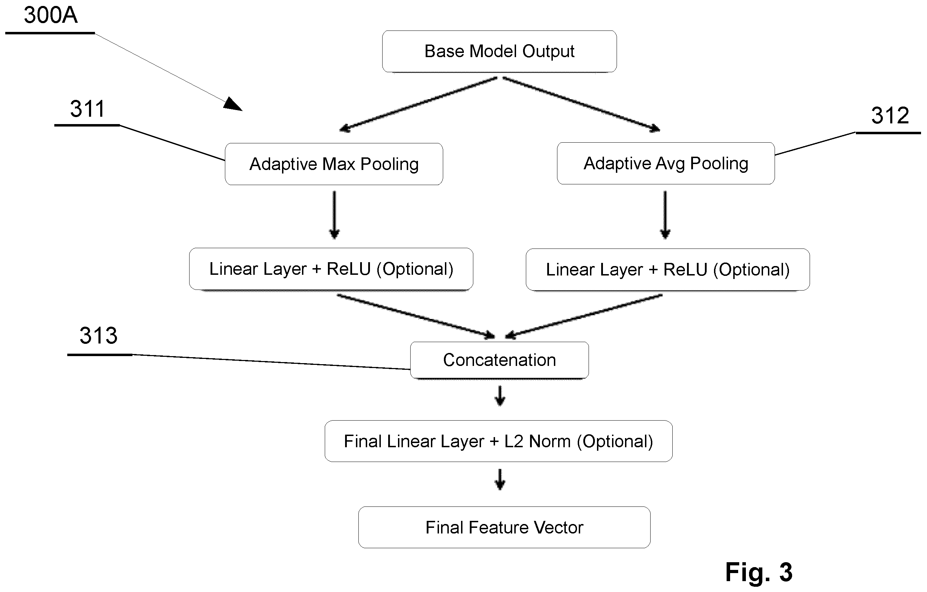

In one embodiment, the customised pooling layer 300A comprises two independent pooling layers-one for max pooling and one for average pooling-each produce a separate feature map, and the results are concatenated to yield a descriptive product feature vector. This embodiment is shown in Figure 3.

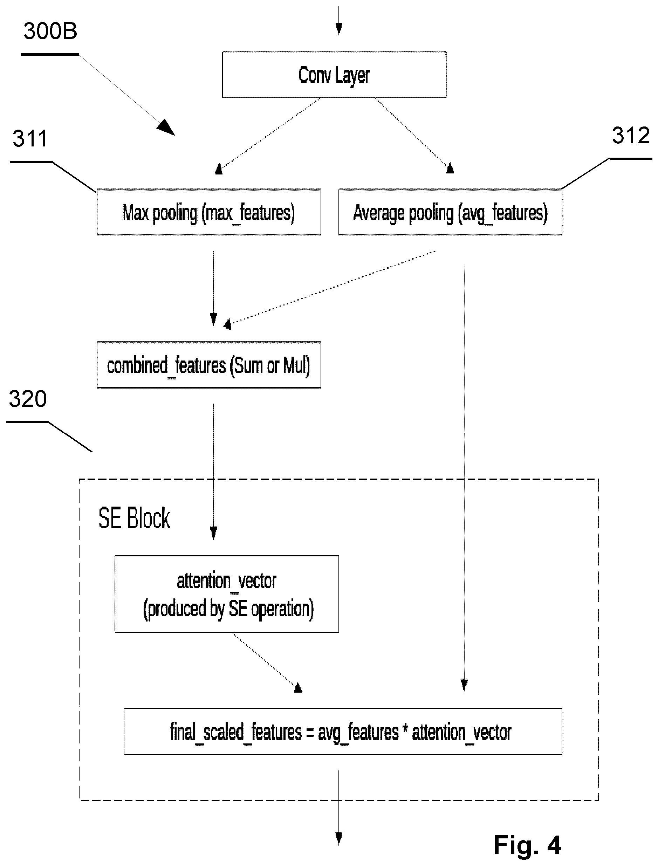

In another embodiment, the convolutional neural network used in the feature extractor 223 comprises a squeeze-and-excitation block, and an average pooling layer is positioned before that block. The customised pooling layer 300B is provided by adding a max pooling layer in parallel at the same stage, the system can enhance responsiveness to both prominent and subtle aspects of the product image. This embodiment is shown in Figure 4.

These technical refinements are well suited to various image-recognition or object-detection tasks beyond shelf-based product recognition. Consequently, the customised pooling layer 300A, 300B described here could have broader applications and may support future filings focused on improved pooling methods in convolutional neural networks for general image analysis.

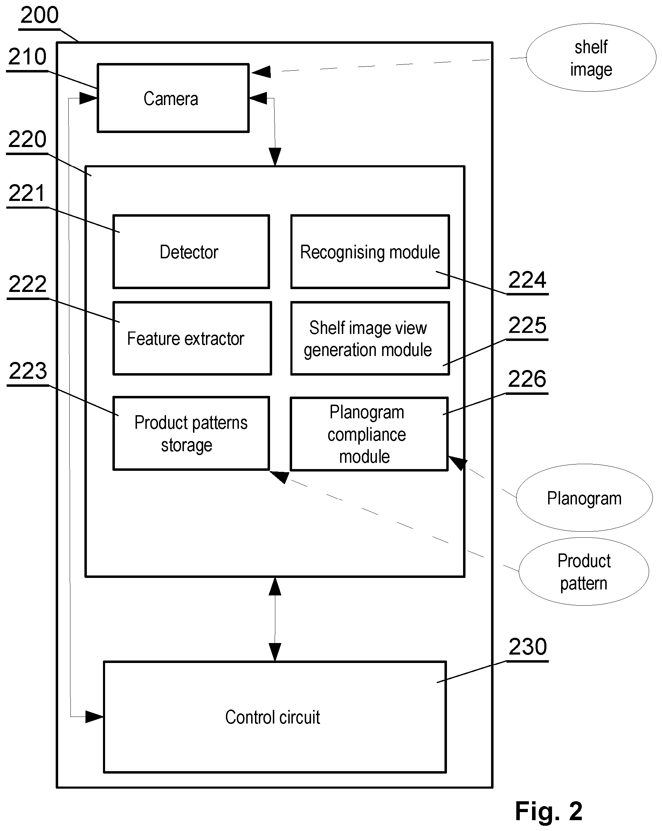

Another aspect of the invention relates to a system for product recognition and planogram compliance using a mobile device 200, schematically shown in Fig. 2. The mobile device 200 includes a camera 210 for scanning shelves, a non-transitory medium 220 for storing data and instructions necessary to implement recognition and planogram compliance, and a control circuit 230 for executing the method steps described above, from scanning through planogram comparison.

In some embodiments, the mobile device 200 comprises specific means for carrying out specific steps. These embodiments provide, within the mobile device 200:
a detector 221 configured to identify product facings in the shelf image by generating bounding boxes;
a feature extractor 222 that implements the previously mentioned convolutional neural network architecture, including the customised pooling layer;
a product patterns storage 223, which holds one or more product patterns representing known products;
a recognising module 224 that compares each extracted feature vector against the patterns stored in the product patterns storage 224, thereby identifying the most likely product and computing a probability of recognition;
a shelf image view generation module 225 that produces an annotated shelf image by overlaying bounding boxes on recognised products, each box having a colour corresponding to its confidence level; and
a planogram compliance module 226 that receives a reference planogram, compares it to the annotated shelf image, and produces a compliance report detailing any discrepancies.

In certain embodiments, the customised pooling layer 300A is realised by introducing two independent pooling layers: a max pooling layer and an average pooling layer, each operating on the same input feature map in parallel. Features generated by these pooling layers are then concatenated and used to create the final product feature vector.

In other embodiments, the convolutional neural network includes a squeeze-and-excitation block along with an average pooling layer before it, and the customised pooling layer 300B adds a max pooling layer in parallel at that stage, which further improves the responsiveness of the network to critical product features.

In some embodiments, the system is also configured, after generating the annotated shelf image, to enable a user to manually correct any product recognition errors.

In other embodiments, the product patterns consist of external enrolments and/or local enrolments, wherein:
local enrolments are generated based on product feature vectors produced earlier by the same mobile device 200 and stored locally, and
external enrolments are generated based on product feature vectors produced by other devices or by an external server.

In a further embodiment, the planogram compliance module 227 can rely on historical data to detect longer-term trends or recurring out-of-stock scenarios. The user-correction mechanism for erroneous product recognition can also vary, for instance, by letting a store associate tap an incorrectly recognised product on the screen and select the correct product from a dropdown menu. The choice between local and external enrolments can depend on operational considerations, for example, using local enrolments during poor connectivity or employing external enrolments to maintain uniform recognition standards across different sites.

The control circuit 230 may be a general-purpose processor, an application-specific integrated circuit, or a specialised Al accelerator, depending on performance requirements. If additional parallel pooling layers are implemented, the system may integrate multiple squeeze-and-excitation blocks in series more effectively, refining the extracted features at successive stages of the convolution. Such refinements make it possible to balance memory usage, processing capacity, and network availability without compromising the robustness of product detection, feature extraction, recognition, and planogram compliance.

The integrated approach described here provides a comprehensive solution for retail product management by ensuring that product facings match their intended arrangement. The invention's combination of real-time product recognition with an accessible planogram compliance report delivers a highly efficient workflow for proper shelf stocking. Furthermore, the particular method that merges max pooling and average pooling within the final stage of the convolutional neural network feature extractor is not restricted to planogram use cases and may be extended to other detection and classification tasks. This wider applicability opens a path for divisional patent applications addressing the technical contribution of the customised pooling layer and its interplay with squeeze-and-excitation blocks.

### EXAMPLE 1

In one embodiment of the system according to the invention, the mobile device 200 is equipped with a control circuit 230 that coordinates multiple modules to detect, store, classify, and annotate product images while checking planogram compliance. The mobile device includes the detector 221 for detecting product facings in the shelf image, the feature extractor 222 implemented by a convolutional neural network, the product patterns storage 223 for holding reference feature vectors of known products, the recognising module 224 for matching extracted features to these reference patterns, the shelf image view generation module 225 for constructing an annotated shelf view, and the planogram compliance module 226 for generating a final compliance report.

When a shelf image is captured, the detector 221 isolates bounding boxes around each suspected product facing by applying an object-detection neural model such as YOLO, Faster R-CNN, or a Single Shot Detector (SSD). The choice of model can be tailored to desired real-time performance or accuracy.

The feature extractor 222 then processes each cropped product image to generate a high-dimensional product feature vector. This convolutional neural network may rely on a MobileNet, ShuffleNetV2+, EfficientNet, or lightweight ResNet backbone. At the final stage of the network, a customised pooling layer 300A runs max pooling 311 and average pooling 312 in parallel, concatenating 313 the outputs for a more descriptive set of feature values. This mechanism captures both strong localised activations and the overall distribution of features, yielding a feature vector robust to partial occlusions or subtle product variations.

As an alternative, a squeeze-and-excitation (SE) block can be added prior to the customised pooling layer 300B to reweight feature channels dynamically based on their importance to product identification. The reweighted outputs then feed the parallel max and average pooling operations, producing a final vector well adapted to hardware-limited mobile devices.

Both the detector 221 and the feature extractor 222 are trained using three distinct datasets, namely training, validation, and test sets. For the detector 221, images of entire shelves with appropriately labelled products are employed, whereas for the feature extractor 222, images of individual products are used. Preferably, the overall dataset is partitioned into approximately 70% training data, 15% validation data, and 15% test data. The training process is carried out until an observable improvement in classification accuracy is achieved on the validation set. Once the classification performance ceases to improve during validation-an indication of potential overtraining-the training process is terminated. When the detector 221 and the feature extractor 222 achieve a correct classification rate of at least 90% on the test set, they are considered to be well-trained and reliable for subsequent product recognition and feature vector generation tasks.

The recognising module 224 compares the resulting product feature vector to entries in the product patterns storage 223. If a match surpasses a specified threshold (in distance-based comparisons) or if a classifier predicts a class label with high confidence, the product image is deemed recognised. The shelf image view generation module 225 overlays bounding boxes on the shelf image, indicating recognition confidence with different colours.

Subsequently, the planogram compliance module 226 accesses a reference planogram, checking product positions and types against planogram requirements. It generates a compliance report noting products in incorrect locations or empty slots that should be occupied. Depending on the system design, the module can operate entirely on the device or partially use a remote server for planogram data or advanced analytics, but in either scenario minimal manual intervention is required.

By combining these components, the system achieves real-time or near-real-time product detection and planogram checking on a single handheld device. The design offers flexibility in terms of computational needs, network connectivity, and memory constraints while still providing quick corrections and immediate compliance insights.

### EXAMPLE 2

In one embodiment of the invention, the mobile device 200 captures a shelf image with its embedded camera 210 and processes each cropped product image using a convolutional neural network that features a parallel max-and-average pooling layer 300A at its end. The hardware may include a general-purpose CPU alongside a GPU or neural accelerator for faster inference. The application, running on an Android or iOS operating system, manages recognition and planogram verification locally.

Once the user scans the shelf, the detector 221 locates product facings using a lightweight detection model such as YOLO or SSD. After cropping, the product images feed into the feature extractor 222, which includes a series of convolutional stages (e.g., MobileNet or EfficientNet) culminating in the customised pooling layer 300A. This layer performs max pooling 311 and average pooling 312 in parallel on the final feature map and concatenates 313 the results to form a feature vector that retains both local peak information and global statistics. The customised pooling layer 300A structure is schematically shown in Fig. 3. Implementations in TensorFlow Lite or PyTorch permit real-time inference while preserving descriptive power.

The recognising module 224 next compares the concatenated feature vector with stored product patterns, using either a nearest neighbour algorithm. The product patterns storage 223, holds enrolments that are reference feature vectors. When a match surpasses a confidence threshold, the system labels the cropped image accordingly and highlights it with a bounding box and colour-coded confidence indicator. If recognition is uncertain, the user can tap to make corrections.

Once recognition is concluded, the planogram compliance module 226 retrieves a cached or downloaded planogram specifying the proper arrangement of products and facings. It checks for out-of-place items and missing stock, then presents a discrepancy report. The store operator may rectify errors on the spot by rearranging items or marking exceptions within the application. Through its parallel pooling design, the feature extractor 222 attains enhanced accuracy under different lighting and packaging conditions without imposing unsustainable computational demands.

### EXAMPLE 3

Certain embodiments of the system incorporate a squeeze-and-excitation (SE) block in the convolutional neural network in conjunction with both an average pooling layer and a new max pooling layer placed before the SE block. This arrangement ensures that both average- and max-pooled features are provided to the channel-attention mechanism, thereby improving product identification accuracy.

The mobile device 200 includes a camera 210 for shelf image capture, a control circuit 230 configured for local inference, and storage 220. An application on the device orchestrates scanning, recognition, and planogram compliance reporting.

When a user triggers the shelf scan, the camera 210 produces a high-resolution image of the shelf. An on-device detector 221, such as MobileNet-SSD, YOLO, or an optimised Faster R-CNN, pinpoints bounding boxes for each product facing. These cropped images enter the feature extractor 222, which is a convolutional neural network, which has, at its final stage, the customised pooling layer 300B comprising an average pooling layer 312, a max pooling layer 311, and the SE block 320. The customised pooling layer 300B structure is schematically shown in Fig. 3. The average pooling layer 312 accumulates global distribution information, and the max pooling layer 311 highlights the strongest local activations; both outputs inform the SE block 320, which reweights channels to emphasise critical product indicators. After this process, the feature map is aggregated into a final product feature vector.

The recognising module 224 compares that product feature vector against patterns in the product patterns storage 223, either via a nearest neighbour approach. The annotated shelf image, generated by the shelf image view generation module 225, is displayed with bounding boxes, each bearing a colour or label showing confidence. The planogram compliance module 226 then verifies whether recognised products match planogram expectations and identifies empty spaces or misplaced items, delivering a compliance report on the device.

By using both average and max pooling before and after the squeeze-and-excitation block, the invention heightens relevant visual signals for robust product recognition and facilitates real-time execution on mobile hardware.

### EXAMPLE 4

In this embodiment, the mobile device 200 captures a shelf image using its embedded camera 210, and a detector 221 identifies and crops product facings from the shelf image, analogous to Example 2. The key difference lies in the training of the feature extractor 222. Here, the feature extractor 222-comprising a convolutional neural network with a customised pooling layer 300A that performs max pooling 311 and average pooling 312 in parallel-is directly trained using knowledge distillation.

In this approach, a pre-trained teacher network, previously trained on a comprehensive dataset of product images, processes the same training product images to generate soft target outputs. The feature extractor 222, serving as the student network, is then trained to mimic these soft outputs by minimising a knowledge distillation loss function, such as the Kullback-Leibler divergence between its own outputs and those of the teacher network. This training technique enables the feature extractor 222 to learn more discriminative and robust representations of product features, thereby enhancing recognition accuracy under varying conditions.

All other aspects of the embodiment-including product recognition, annotated shelf image generation, and planogram compliance checking-are analogous to those described in Example 2.

## Claims

1. A computer-implemented method for product recognition and planogram compliance using a mobile device, the method comprising:
scanning (101) a shelf comprising at least one product with a camera of the mobile device to obtain a shelf image;
detecting (102) products in the shelf image using a detector (221) trained to detect the products, and cropping portions of the shelf image containing product facings as product images;
extracting (103) a product feature vector for each product image using a feature extractor (222), wherein the feature extractor (222) is a convolutional neural network trained to extract the product feature vectors, the convolutional neural network comprising a customised pooling layer (300A, 300B) at its last stage that combines max pooling and average pooling;
receiving (104), on the mobile device, at least one product pattern representing a product;
recognising (105), for each product image, the product present in the product image using a recognising module (224) configured to compare the product feature vector with at least one product pattern, thereby obtaining a set of recognised product images with an associated probability of recognition;
generating (106), using a shelf image view generation module, an annotated view of the shelf image comprising bounding boxes around the recognised products, each bounding box having a property indicating the probability of recognition; and
receiving a planogram of the shelf and comparing (107) the annotated view of the shelf image with the planogram to generate a planogram compliance report.

2. The method according to claim 1, **characterised in that** the customised pooling layer (300A) is implemented by introducing two independent pooling layers, comprising a max pooling layer and an average pooling layer applied in parallel on the same input feature map, wherein resulting features produced by the max pooling layer and the average pooling layer are concatenated, and the aggregated features are used to create the product feature vector.

3. The method according to claim 1, **characterised in that** the convolutional neural network comprises a squeeze-and-excitation block and an average pooling layer before the squeeze-and-excitation block, and wherein the customised pooling layer (300B) is implemented by adding a max pooling layer before the squeeze-and-excitation block in addition to the average pooling layer.

4. The method according to any of the preceding claims, **characterised in that**, the feature extractor (222) training is further enhanced by knowledge distillation, and further comprising:
providing a pre-trained teacher network configured for product recognition;
generating soft target outputs for a plurality of product images using the teacher network; and
training the convolutional neural network to produce the product feature vectors by minimising a knowledge distillation loss function based on a divergence between the soft target outputs and the outputs of the convolutional neural network.

5. The method according to any of the preceding claims, **characterised in that**, after generating the annotated view of the shelf image, the method further comprises enabling a user to manually correct any erroneous product recognition.

6. The method according to any of the preceding claims, **characterised in that** the product patterns comprise external enrolments and/or local enrolments, wherein:
the local enrolments are product patterns generated based on product feature vectors generated earlier by the same mobile device and stored locally on the mobile device; and
the external enrolments are product patterns generated based on product feature vectors generated earlier by another mobile device or by an external server.

7. A system for product recognition and planogram compliance using a mobile device, **characterised in that** the system comprises:
a mobile device (200) including:
a camera (210) configured to scan a shelf comprising at least one product to obtain a shelf image;
a non-transitory medium (220) configured to store data and instructions; and
a control circuit (230) configured to perform the method of any one of claims 1 to 6.

8. The system according to claim 7, wherein the mobile 200 device further comprises:
a detector (221) trained to detect products in the shelf image and to crop parts of the shelf image containing product facings as product images;
a feature extractor (222) implemented by a convolutional neural network trained to extract product feature vectors from the product images, the convolutional neural network comprising a customised pooling layer (300A, 300B) at its last stage, wherein the customised pooling layer (300A, 300B) combines max pooling and average pooling;
a product patterns storage (223) configured to receive at least one product pattern representing the product;
a recognising module (224) configured to compare, for each product image, the product feature vector with at least one product pattern, thereby obtaining a set of recognised product images with a probability of product recognition;
a shelf image view generation module (225) configured to generate an annotated view of the shelf image, wherein the annotated view comprises recognised products in bounding boxes each having a property indicating the probability of recognition; and
a planogram compliance module (226) configured to receive a planogram of the shelf and compare the annotated view of the shelf image with the planogram to generate a planogram compliance report.

9. The system according to claim 7 or 8, **characterised in that** the customised pooling layer (300A) is implemented by introducing two independent pooling layers, comprising a max pooling layer and an average pooling layer applied in parallel on the same input feature map, wherein resulting features produced by the max pooling layer and the average pooling layer are concatenated, and the aggregated features are used to create the product feature vector.

10. The system according to claim 7 or 8, **characterised in that** the convolutional neural network comprises a squeeze-and-excitation block and an average pooling layer before the squeeze-and-excitation block, and wherein the customised pooling layer (300B) is implemented by adding a max pooling layer before the squeeze-and-excitation block in addition to the average pooling layer.

11. The system according to any one of claims 7 to 10, **characterised in that** the system is further configured, after generating the annotated view of the shelf image, to enable a user to manually correct any erroneous product recognition.

12. The system according to any one of claims 7 to 11, **characterised in that** the product patterns comprise external enrolments and/or local enrolments, wherein:
the local enrolments are product patterns generated based on product feature vectors produced earlier by the same mobile device and stored locally on the mobile device; and
the external enrolments are product patterns generated based on product feature vectors produced earlier by another mobile device or by an external server.

13. The system according to any one of claims 7 to 12, **characterised in that**, the feature extractor (222) is trained by knowledge distillation, and feature extractor (222) training comprising:
providing a pre-trained teacher network configured for product recognition;
generating soft target outputs for a plurality of product images using the teacher network; and
training the convolutional neural network to produce the product feature vectors by minimising a knowledge distillation loss function based on a divergence between the soft target outputs and the outputs of the convolutional neural network.
